Europäisches Patentamt

European Patent Office

Office européen des brevets

(19)

(11) **EP 1 571 663 A2**

(12) **EUROPEAN PATENT APPLICATION**

(43) Date of publication:
**07.09.2005 Bulletin 2005/36**

(51) Int Cl.$^7$: **G11B 20/10**

(21) Application number: **05100701.1**

(22) Date of filing: **02.02.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **24.02.2004 JP 2004048179**

(71) Applicant: **KABUSHIKI KAISHA TOSHIBA Tokyo 105-8001 (JP)**

(72) Inventors:
• **Moro, Hiroyuki c/o Toshiba Corporation 1 chome, Minato-ku, Tokyo 105-8001 (JP)**

• **Kaneshige, Toshihiko c/o Toshiba Corporation 1 chome, Minato-ku, Tokyo 105-8001 (JP)**
• **Yamakawa, Hideyuki c/o Toshiba Corporation 1 chome, Minato-ku, Tokyo 105-8001 (JP)**
• **Otake, Koichi c/o Toshiba Corporation 1 chome, Minato-ku, Tokyo 105-8001 (JP)**
• **Tatsuzawa, Yukiyasu c/o Toshiba Corporation 1 chome, Minato-ku, Tokyo 105-8001 (JP)**

(74) Representative: **Henkel, Feiler & Hänzel Möhlstrasse 37 81675 München (DE)**

(54) **Apparatus and method for reproducing information from optical discs, and optical disc**

(57)    A digital RF signal resulting from A/D conversion of an RF signal reproduced from an optical disk is compared with a plurality of set values, so that a predetermined waveform is detected from the digital RF signal. The wavelength of the detected waveform is measured, and the A/D conversion is controlled based on this wavelength. Comparing the digital RF signal with the plural set values enables high-accuracy waveform detection.

FIG. 3

EP 1 571 663 A2

**Description**

Cross-reference to the Invention

This application is based upon and claims the benefit of priority from the prior Japanese Patent Application NO. 2004-048179, file on February 24, 2004; the entire contents of which are incorporated herein by reference.

Background of the Invention

1. Field of the Invention

The present invention relates to an optical disk device that converts an RF signal corresponding to the recorded contents on an optical disk from an analog value to a digital value for reproduction of information, a reproduction method of information on an optical disk, and an optical disk.

2. Description of the Related Art

For reproduction of information from an optical disk such as a CD (Compact Disk) and a DVD (Digital Versatile Disk), an optical disk device is used. The optical disk is rotated and irradiated with light, so that the information on optical disk is reproduced. At this time, an RF signal read from the optical disk is analog/digital-converted at a cycle determined based on a SYNC pattern (synchronizing signal) included in the RF signal.
Here, in order to detect the SYNC pattern in the RF signal, a wavelength of a waveform in the RF signal is measured, using a zero-cross point (center slice) as a reference.
A technique is disclosed for measuring an edge timing at which a measured voltage waveform crosses a threshold level (see Japanese Patent Laid-open Application No. Hei 6-242185).

Summary of the Invention

One of possible ways to improve the recording density of an optical disk is to adopt a partial response technique. The partial response (PR) is a method of positively utilizing inter-symbol interference(interference between reproduced signalscorresponding to bits recorded adjacent to each other) to reproduce data while compressing a necessary signal band.
In this case, in an effort of detecting a waveform using a center slice (slice level), there is a possibility that the detection of the waveform having a short wavelength is prevented by the fluctuation in DC level and the influence of noises since its amplitude is small, and a wavelength of a waveform before or after the waveform of the short waveform may be detected as apparently large. For example, if a SYNC pattern of 13T3T is a detection object in a HD-DVD (High-Definition DVD) of a next-generation optical disk standard, there is a possibility that a waveform of 2T may appear before or after the detection object. At this time, if the detection object and this waveform of 2T cannot be separated from each other, the SYNC pattern is detected as 15T3T or 13T5T, which makes it difficult to recognize the real SYNC pattern.
In view of the above, it is an object of the present invention to provide an optical disk device, a reproduction method of information on an optical disk, and an optical disk realizing higher-accuracy waveform detection.

A. An optical disk device according to one of the aspects of the present invention includes: an A/D converter converting an RF signal reproduced from an optical disk from an analog value to a digital value to output a digital RF signal; a waveform detecting unit comparing the outputted digital RF signal with a plurality of set values to detect a predetermined waveform from the digital RF signal; a wavelength measuring unit measuring a wavelength of the detectedwaveform; and a control signal generator generating a control signal controlling the A/D conversion in the A/D converter, based on the measured wavelength.
The digital RF signal resulting from the A/D conversion of the RF signal reproduced from the optical disk is compared with the plural set values, so that a predetermined waveform is detected from the digital RF signal. The wavelength of the detected waveform is measured and the A/D convers ion is controlled based on this wavelength. Comparing the digital RF signal with the plural set values enables high-accuracy waveform detection.
B. A reproduction method of information on an optical disk according to another aspect of the present invention includes: converting by an A/D converter an RF signal reproduced from an optical disk from an analog value to a digital value to output a digital RF signal; comparing the outputted digital RF signal with a plurality of set values to detect a predetermined waveform from the digital RF signal; measuring a wavelength of the detected waveform; and generating a control signal controlling the A/D conversion in the AD converter, based on the measured wavelength.

C. Information on an optical disk according to still another aspect of the present invention is reproduced by a reproduction method including: converting by an AD converter an RF signal reproduced from an optical disk from an analog value to a digital value to output a digital RF signal; comparing the outputted digital RF signal with a plurality of set values to detect a predetermined waveform from the digital RF signal; measuring a wavelength of the detected waveform; and generating a control signal controlling the A/D conversion in the AD converter, based on the measured wavelength.

Brief Description of the Drawings

Fig. 1 is a block diagram showing an optical disk device according to an embodiment of the present invention.
Fig. 2 is a block diagram showing an internal configuration of a frequency detector in detail.
Fig. 3 is a graph showing a multilevel RF signal outputted from an A/D converter.

Description of the Embodiments

Hereinafter, embodiments of the present invention will be described in detail with reference to the drawings.

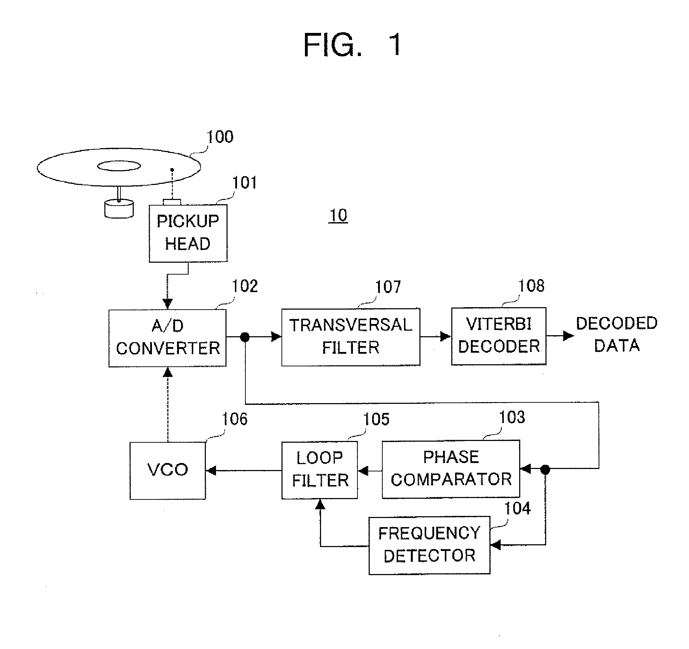

Fig. 1 is a block diagram showing an optical disk device 10 according to an embodiment of the present invention.
An optical disk device 10 is a device reading information from an optical disk medium 100, and it includes a pickup head (PUH) 101, an A/D converter (ADC) 102, a phase comparator 103, a frequency detector 104, a loop filter 105, a VCD (Voltage Controlled Oscillator) 106, a transversal filter 107, and a Viterbi decoder 108.
The pickup head 101 reproduces a signal corresponding to the information recorded on the optical disk medium 100, and it includes: a laser light source irradiating the optical disk medium 100 with a leaser beam; and a photoreceptor (not shown) receiving the leaser beam reflected from the optical disk medium 100. The reproduced signal outputted from the photoreceptor is amplified by a reproducing amplifier (not shown) to become a reproduced RF signal.
The A/D converter 102 is an element that A/D converts the inputted reproduced RF signal to output a digital RF signal (a multilevel RF signal). This digital RF signal has a multilevel digital value and is outputted at substantially regular intervals.
The A/D conversion in the A/D converter 102 is controlled by a control signal outputted from the VCO 106. This means that a cycle (time interval) of the A/D conversion is determined based on an oscillation frequency of the VCO 106.
The A/D converter 102 has an adjusting mechanism (a kind of an amplifier) adjusting an offset (also called "zero level" or "slice level") and the amplitude of the inputted reproduced RF signal, and it A/D converts the reproduced RF signal adjusted by this adjusting mechanism. Note that the reproduced RF signal is adjusted in this adjusting mechanism based on signal adjustment information inputted from the transversal filter 107.
The phase comparator 103 is a circuit that compares a phase of the multilevel RF signal outputted from the A/D converter 102 and a phase of the output signal of the VCO 106 to output a phase difference.
The frequency detector 104 is a circuit that detects (measures) a frequency of the multilevel RF signal inputted from the A/D converter 102 and outputs a frequency error signal representing a difference between this frequency and a frequency of the output signal of the VCO 106. Further, the frequency detector 104 also outputs a frequency error detection signal that is used as a control signal controlling the determination whether or not the outputted frequency error signal is to be used in the loop filter 105. The internal configuration of the frequency detector 104 will be detailed later.
The loop filter 105 is a circuit that generates a voltage controlling the VCO 106, based on the phase error outputted from the phase comparator 103 and the frequency error outputted from the frequency detector 105.
The VCO 106 is an oscillation circuit oscillating at a frequency corresponding to the control voltage outputted from the loop filter 105 and it functions as a control signal generator.
The transversal filter 107 is a filter to equalize the multilevel RF signal to a PR waveform. The transversal filter 107 functions as a waveform equalizer to correct reproduction distortion. Further, the transversal filter 107 outputs to the A/D converter 102 the signal adjustment information for adjusting the offset (also called "zero level" or "slice level") and the amplitude of the reproduced RF signal.
The Viterbi decoder 108 decodes data equalized in the transversal filter 107.

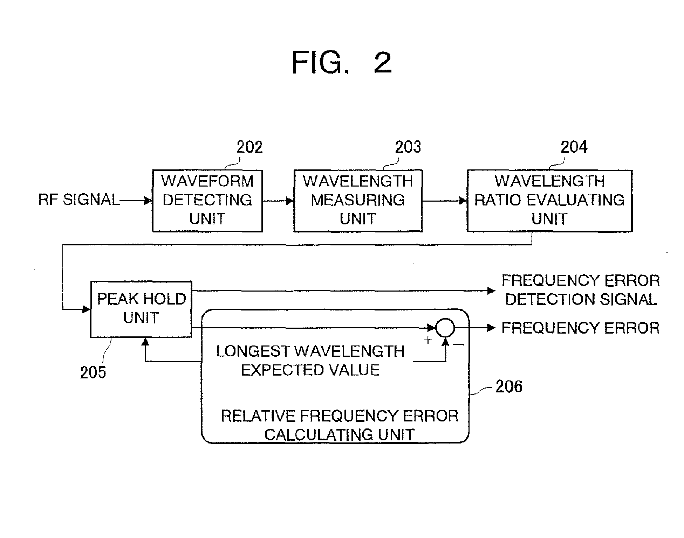

Fig. 2 is a block diagram showing the internal configuration of the frequency detector 104 in detail.
The frequency detector 104 includes a waveform detecting unit 202, a wavelength measuring unit 203, a wavelength ratio evaluating unit 204, a peak hold unit 205, and a relative frequency error calculating unit 206, and it receives the multilevel RF signal and outputs the frequency error signal and the frequency error detection signal.

The waveform detecting unit 202 receives the multilevel RF signal outputted from the A/D converter 102 to detect whether or not the multilevel RF signal includes a predetermined waveform. The detection of the waveform is intended for extracting a SYNC pattern (synchronizing signal waveform) from the multilevel RF signal, and controlling, based on this SYNC pattern, the time interval of the A/D conversion in the A/D converter 102. Note that the waveform detecting unit 202 stores three threshold values, namely, a first, a second, and a third threshold value Sh1, Sh2, Sh3 and detects a first and a second waveform W1, W2 in the multilevel RF signal, using these three threshold values, as will be described later.

The wavelength measuring unit 203 measures a wavelength of the predetermined waveform detected in the waveform detecting unit 202. At this time, a ratio of wavelength is calculated.

The "wavelength" mentioned here means an amount corresponding to the time interval that it takes for the multilevel RF signal to cross the slice level, and corresponds to the time interval that it takes for the multilevel RF signal to reach a peak (a positive extremum) from the slice level (zero point) to return to the slice level, or the time interval that it takes for the multilevel RF signal to reach a valley (a negative extremum) from the slice level (zero point) to return to the slice level again. In short, the "wavelength" is the time from the appearance of the peak or the valley to its disappearance.

The predetermined waveform includes the plural wavelengths. For example, the SYNC pattern is a peak and a valley of 13T and 3T. At this time, a ratio 13/3 (= 4.33) of the wavelength in the peak portion (the time interval from separation from the slice level to return thereto) 13T and the waveform 3T in the valley portion is the wavelength ratio.

As is understood from the above, the "wavelength" can be measured in a unit of time, for example, in a unit of second. Instead, the "wavelength" can be measured in a unit of the number of the multilevel RF signals outputted during this period (the number of times of the A/D conversions in the A/D converter 102), and this will suffice. In order to control the time interval of the A/D conversion, the absolute time need not be known, but it will suffice if the relative time determined by the number of times of the conversions or the like is known.

The wavelength ratio evaluating unit 204 determines whether or not there is a possibility of the detected waveform being the SYNC pattern, based on the wavelength ratio calculated by the wavelength measuring unit 203. Specifically, it is judged whether or not the wavelength ratio calculated by the wavelength measuring unit 203 falls within a predetermined range. For example, when the SYNC pattern is a peak and a valley of 13T and 3T, a waveform in which the detected wavelength ratio approximates 4.33 has the possibility of being the SYNC pattern.

The peak hold unit 205 holds the maximum value of the wavelengths in the waveform that the wavelength ratio evaluating unit 204 has judged as having the possibility of being the SYNC pattern (peak hold). This is intended for more reliable detection of the SYNC pattern since the SYNC pattern is set to have the longest wavelength in the multilevel RF signal. The peak hold by the peak hold unit 205 is repeated at a certain predetermined cycle, and at the end of each cycle, the peak hold unit 205 outputs the frequency error detection signal notifying whether or not the frequency error is detected.

A peak-held wavelength by the peak hold unit 205 is limited within a wavelength range determined according to the longest wavelength expected value. For example, when a wavelength whose value falls within a range of ±10% of the longest wavelength expected value is inputted to the peak hold unit 205, this wavelength is held in the peak hold unit 205. When a wavelength whose value is larger than the held wavelength value as well as falls within the upper limit and lower limit range (for example, the range of ±10% of the longest wavelength expected value) is inputted, the held wavelength value is updated. If a wavelength whose value falls outside this range is inputted, the held wavelength value is processed as if a value falling within the range as well as being the most proximate to the inputted value (an upper limit value or a lower limit value) were inputted.

It is assumed that the longest wavelength expected value is the longest wavelength possibly occurring in a system (the longest wavelength value used in the optical disk medium 100) and is stored in a storage unit (for example, a memory or a register). This is because the SYNC pattern is set so as to have the wavelength that is the longest in the multilevel RF signal (longest wavelength) as described above. For example, when the SYNC pattern is 13T and 3T, the longest wavelength expected value is 16T.

The relative frequency error calculating unit 206 subtracts the longest wavelength expected value that is the longest wavelength possibly occurring in the system, from the longest wavelength found in the peak hold unit 205, and outputs the frequency error based on the calculated wavelength difference.

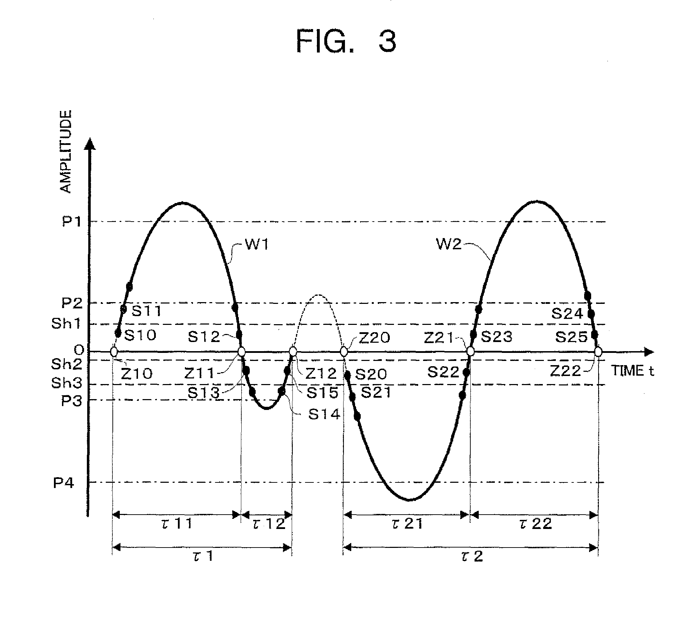

Fig. 3 is a graph showing the multilevel RF signal outputted from the A/D converter 102. In this graph, amplitude (intensity) of the signal is taken on the vertical axis and time is taken on the horizontal axis. The zero level (the origin 0) as a reference on the vertical axis matches the slice level (center slice) . This is because the reproduced RF signal is A/D converted after the offset (zero level, slice level) and the amplitude of the reproduced RF signal is adjusted based the signal adjustment information outputted from the transversal filter 107, as previously described.

As shown in Fig. 3, the multilevel RF signal is outputted at substantially regular time intervals, and the value thereof is represented as a digital value S(t) that varies with time t. The black circles S10, S11, S12, ..., S20, S21, S22, ... in Fig. 3 represent the multilevel RF signal S(t).

Though the multilevel RF signal S(t) is a signal outputted at substantially regular time intervals, only unit thereof is shown in Fig. 3.

Hereinafter, the operation of the frequency detector 104 will be detailed, using Fig. 3.

As described above, the waveform detecting unit 202 stores the three threshold values, namely, the first to third threshold values Sh1 to Sh3 and detects the first and second waveforms W1, W2 from an input signal.

The first to third threshold values Sh1 to Sh3 are set to be a large, a medium, and a small value in this order, and to be larger than the slice level, proximate to the slice level (for example, 1/10 of a difference between the threshold value Sh1 and the slice level), and smaller than the slice level, respectively. Incidentally, the second threshold value Sh2 may be the slice level value itself.

Further, when the waveform to be detected has a plurality of extrema, the first to third threshold values Sh1 to Sh3 are set to fall within a narrow range. For example, in Fig. 3, the first and second waveforms W1, W2 to be detected have extrema P1 to P4. At this time, the first to third threshold values Sh1 to Sh3 are set so as to have the following relation to the extrema P2, P3 that are the most proximate to the slice level: P2 > Sh1, Sh2, Sh 3 > P3.

The detection conditions of the first and second waveforms W1, W2 are as follows. That is, when the following conditions are satisfied, it is judged that the first and second waveforms W1, W2 are detected, respectively.

The detection condition of the first waveform W1 : a case where Condition 11 is satisfied once, thereafter Condition 12 is satisfied once before Conditions 11, 13 are satisfied, and Condition 13 is satisfied before Conditions 11, 12 are satisfied

The detection condition of the second waveform W2: a case where Condition 21 is satisfied once, thereafter Condition 22 is satisfied once before Conditions 21, 23 are satisfied, and Condition 23 is satisfied before Conditions 21, 22 are satisfied

Here, Conditions 11 to 13, 21 to 23 are defined as follows.

Condition T.1. : s(t) is smaller than the first threshold value Sh1, and S(t + 1) is equal to or larger than the first threshold value Sh1.

Condition 12: s(t) is larger than the second threshold value sh2, and S(t + 1) is equal to or smaller than the second threshold value Sh2.

Condition 13: S(t) is equal to or smaller than the third threshold value Sh3 , and s(t + 1) is larger than the third threshold value Sh3.

Condition 21: s(t) is larger than the third threshold value Sh3 , and S(t + 1) is equal to or smaller than the third threshold value Sh3.

Condition 22: S (t) is smaller than the second threshold value Sh2, and S(t + 1) is equal to or larger than the second threshold value Sh2.

Condition 23: S(t) is equal to or larger than the first threshold value Sh1, and S(t + 1) is smaller than the first threshold value Sh1.

The waveform is detected based on whether the digital RF signal proximate to each of the plural set values presents an incremental change or a decremental change. That is, waveforms are discriminated based on the correspondence relation between each of the set values and the incremental/decremental change of the signal intensity, and based on the appearance order thereof.

As is understood from the above, the first waveform W1 is detected when a peak, a subsequent valley, and a mid-region therebetween exist. The second waveform W2 is detected when a valley, a subsequent peak, and a mid-region therebetween exist. In simplified terms, the first and second waveforms W1, W2 correspond to the combination of a peak and a valley and the combination of a valley and a peak respectively.

Excluding waveforms except the first and second waveforms W1, W2 results in the exclusion of a waveform of a noise component different from original signals of a peak and a peak, a valley and a valley, and the like, in particular, the SYNC pattern. Further, the first and second waveforms W1, W2 whose phases are opposite to each other (phase difference is 180° or the like) are discriminated from each other.

The first and second waveforms W1, W2 to be detected and the detection conditions thereof described above are not necessarily absolute conditions. For example, only satisfying Condition 13 after the satisfaction of Condition 11 can be a basis of judging that the first waveform W1 is detected (Condition 12 is not checked) . Alternatively, continuous satisfaction of Conditions 11, 21, 12, 23, 13 can be a basis for judging that the first waveform W1 is detected (Conditions 21, 23 are additionally checked).

Lessening the number of the conditions to be checked can simplify processing required for the detection, and increasing the number of the conditions to be checked enables more accurate waveform detection. Therefore, the detection conditions can be appropriately set in consideration of the process ing contents and required detect ion accuracy.

When the first waveforms W1 is detected, the wavelength measuring unit 203 predicts zero-cross points Z10 to Z12 (points on the RF signal matching the slice level) to calculate wavelengths τ1 in the region through the three continuous zero-cross points Z10 to Z12. When the second waveforms W2 is detected, the wavelength measuring unit 203 predicts zero-cross points Z20 to Z22 (points on the RF signal matching the slice level) to calculate wavelengths $\tau2$ in the region through the three continuous zero-cross points Z20 to Z22.

As previously described, the wavelengths $\tau1$, $\tau2$ can be defined by the relative time, for example, the number of the digital signals outputted from the A/D converter 102 (the number of times of the A/D conversions). In other words, the wavelengths $\tau1$, $\tau2$ can be roughly represented by the number of evaluation points included in the detected waveforms.

Further, in order to improve calculation accuracy of the zero-cross points Z10 to Z12, Z20 to Z22, it is preferable to use an correction technique such as interpolation and extrapolation from evaluation points S10 to S15, S20 to S25 of the multilevel RF signal.

Based on the above, the processing in the wavelength measuring unit 203 flows as follows.

The wavelength measuring unit 203 receives from the waveform detecting unit 202 information indicating the detection of the first and second waveforms W1, W2, the values of S(t) and S (t + 1) under the conditions at the time of the waveform detection, and the number of evaluation points included in the detected waveforms.

The wavelength measuring unit 203 calculates the wavelengths of the first and second waveforms W1, W2 based on the received information. At this time, each of the first and second waveforms W1, W2 is divided into its first half (corresponding to Condition 11 to Condition 12 and Condition 21 to Condition 22) and its latter half (corresponding to Condition 12 to Condition 13 and Condition 22 to Condition 23), and the wavelengths in the respective regions (time difference between the zero-cross points) $\tau11$, $\tau12$ and $\tau21$, $\tau22$ are calculated. Then, the wavelengths $\tau11$ and $\tau12$, $\tau21$ and $\tau22$ are added to calculate the total wavelengths $\tau1$, $\tau2$ respectively. This is because the wavelength ratio evaluating unit 204 uses the ratio of the wavelengths $\tau11$, $\tau12$.

The evaluation points S10 and S11 in Fig. 3 correspond to S(t) and S (t +1) of Condition 11 in the first waveform W1 respectively. The evaluation points S12 and S13 correspond to S(t) and S(t + 1) of Condition 12 respectively, and the evaluation points S4 and S5 correspond to S(t) and S(t + 1) of Condition 13 respectively.

The wavelength $\tau11$ between the two zero-cross points Z10 and Z11 on the first half side is represented by the following expression.

$$\tau11 = N(S10, S13) + s10/(s11 - S10) + S12/(S12 - S13) \qquad \text{Expression (1)}$$

N(S10, S13): the number of evaluation points between the evaluation points S10, S13 (excluding the both ends S10, S13)

Here, s10/(s11 - S10) corresponds to an intersection (the zero-cross point Z10) of a line connecting the evaluation points S11, S10 (an extrapolation line of the evaluation points S10, S11) and the slice level. S12/(S12 - S13) corresponds to an intersection (the aero-cross point Z11) of a line connecting the evaluation points S12, S13 (an interpolation line of the evaluation points S12 and S13) and the slice level.

Therefore, the two evaluation points are interpolated using linear approximation here. Increasing the number of the evaluation points used in the interpolation makes it possible to adopt quadratic approximation or higher-order approximation instead of linear approximation.

The wavelength $\tau12$ between the two zero-cross points Z11, Z12 on the latter half side is represented as the following expression.

$$\tau12 = N(S12, S15) + S13/(S13 - S12) + S15/(S14 - S15)$$

N(S12, S15): the number of evaluation points between the evaluation points S12, S15 (excluding the both ends S12, S15)

Here, S13/(S13 - S12) corresponds to an intersection (the zero-cross point Z11) of a line connecting the evaluation points S12, S13 (an interpolation line of the evaluation points S12, S13) and the slice level. S15/(S14 - S15) corresponds to an intersection (the zero-cross point Z12) of a line connecting the evaluation points S14, S15 (an extrapolation line of the evaluation points S14, S15) and the slice level.

Therefore, the wavelength $\tau1$ in the region through the three continuous zero-cross points Z10, Z11, Z12 is represented as the following expression (3).

$$\tau1 = \tau11 + \tau12 \qquad \text{Expression (3)}$$

The evaluation points S20 and S21 in Fig. 3 correspond to S(t) and S (t + 1) of Condition 21 in the second waveform W2 respectively. The evaluation points S22 and S23 correspond to S(t) and S(t + 1) of Condition 22 respectively, and the evaluation points S24 and S25 correspond to S(t) and S(t + 1) of Condition 23 respectively.

The wavelength $\tau2$ of the second waveform W2 is calculated based on the following expressions (4) to (6) which are substantially the same as those used for the wavelength $\tau1$.

$$\tau21 = N(S20, S23) + S20/(S21 - S20) + S22/(S22 - S23) \qquad \text{Expression (4)}$$

$$\tau22 = N(S22, S25) + S23/(S23 - S22) + S25/(S24 - S25) \qquad \text{Expression (5)}$$

$$\tau2 = \tau21 + \tau22 \qquad \text{Expression (6)}$$

The wavelength ratio evaluating unit 204 calculates a wavelength ratio ($\tau$i1 : $\tau$i2) (i = 1, 2) from $\tau$i1 and $\tau$i2 calculated by the wavelength measuring unit 203. Further, the wavelength ratio evaluating unit 204 judges whether or not this wavelength ratio corresponds to the wavelength ratio in the waveform to be detected to function as a waveform selecting unit that selects a waveform having a possibility of being the waveform to be detected.

When the SYNC pattern 13T3T is the detection object, the ratio thereof (wavelength ratio) is 13 : 3. In this case, a waveform in which a wavelength ratio $\tau$i1 : $\tau$i2 approximates this ratio is judged as possibly including the waveform to be detected. When the calculated wavelength ratio falls within a range of, for example, $\pm5\%$ of 4.3 (=13/3), this waveform is judged as having the possibility of being the waveform to be detected.

In short, the waveform is detected based on the wavelength ratio of the plural wavelength components included in a single waveform. The wavelength can be measured at this time based on the interval of points where the signal waveform intersects with a predetermined reference value. When the center slice (slice level) is used as the reference value, the intersection is the zero-cross point. The approximation (interpolation or extrapolation) of the digital RF signal enables more accurate calculation of the intersections. Linear approximation is usable as this approximation. Instead, quadratic approximation or higher-order approximation may be used.

Atarget of the peak hold by the peak hold unit 205 is a wavelength that possibly includes the waveform to be detected. This is intended for screening out a wavelength other than that of the waveform to be detected in the case where the SYNC pattern is set to have the longest wavelength detected (for example, HD-DVD).

The relative frequency error calculating unit 206 subtracts the longest wavelength expected value that is the longest wavelength possibly occurring in the system from the wavelength found by the peak hold unit 205.

The foregoing is the operation of the frequency detector 104.

In the above-described embodiment, the waveform detecting unit 202 detects a waveform using the three threshold values, and the wavelength ratio evaluating unit 204 selects the detected wavelength using the wavelength ratio.

Consequently, the following advantages are brought about.

For example, in a HD-DVD, a mark/space length is 2T to 11T and 13T, and a SYNC pattern to be detected is 13T3T including the longest pattern.

However, if the optical diskmedium 100 is damaged, for example, having a scratch, or the pickup head 101 makes a track jump or the like, a wavelength longer than 13T may possibly appear. Further, when a DC offset occurs in the RF signal, 13T may possibly extend/contract. Therefore, only the detection of the longest wavelength 13T might not provide sufficient reliability.

Even in such a case, the use of the wavelength ratio in the region through the three zero-cross points Z0 to Z2, as is done in the wavelength ratio evaluation unit 204, can improve reliability of the waveform detection.

Further, appropriate setting of the first and third threshold values Sh1, Sh3 in the waveform detecting unit 202 can improve accuracy of the waveform detection. For example, the threshold values Sh1, Sh3 are set so that the amplitude of a waveform of 3T included in the detection object is detectable and the amplitude of a waveform of 2T not included in the detection object is not detected. This is because the specification of the optical disk medium 100 is determined such that the wavelength and the amplitude of the waveform correspond to each other. Such setting makes it possible to more surely exclude a waveform in which the ratio approximates that of the SYNC pattern of 13T3T which is the detection object (10T2T, 9T2T, 8T2T, or the like).

As described above, the use of the plural threshold values can lower the possibility of misjudgment in the wavelength ratio evaluating unit 204, resulting in further improved reliability. The use of only the slice level for waveform detection would result in that the wavelength to be detected is measured as apparently larger if a waveform with a short wavelength exists before or after the detection object.

Even when a wavelength with a short wavelength exists before or after the detection object, the use of the plural threshold values enables accurate detection of the wavelength of the waveform to be detected.

Further, the use of the wavelength ratio in the region through the three continuous zero-cross points in detecting the waveform enables more accurate detection of the waveform to be detected.

(Other Embodiment)

In the above-described embodiment, the three continuous zero-cross points are calculated using the three threshold values and information on the evaluation points across these threshold values, which enables waveform detection unsusceptible to the influence of a waveform before or after the waveform to be detected.

An embodiment of the present invention is not limited to the above-described embodiment but may be expanded and changed. The expanded and changed embodiments are also included in the technical scope of the present invention.

For example, though the three set values are used in the embodiment described above, two set values, or four or more set values may be used for the waveform detection.

**Claims**

1.   An optical disk device, comprising:

an A/D converter converting an RF signal reproduced from an optical disk from an analog value to a digital value to output a digital RF signal;
a waveform detecting unit comparing the outputted digital RF signal with a plurality of set values to detect a predetermined waveform from the digital RF signal;
a wavelength measuring unit measuring a wavelength of the detected waveform; and
a control signal generator generating a control signal controlling the A/D conversion in said A/D converter, based on the measured wavelength.

2.   The optical disk device as set forth in claim 1, wherein said waveform detecting unit detects the predetermined waveform based on whether the digital RF signal proximate to each of the plural set values presents an incremental change or a decremental change with time.

3.   The optical disk device as set forth in claim 1, wherein the predetermined wavelength is one of a combination of a peak and a valley and a combination of a valley and a peak.

4.   The optical disk device as set forth in claim 3, wherein said waveform detecting unit discriminates the combination of the peak and the valley and the combination of the valley and the peak from each other when detecting the waveform.

5.   The optical disk device as set forth in claim 1, wherein the number of the plural set values is three or more.

6.   The optical disk device as set forth in claim 5, wherein the plural set values are proximate to a slice level, larger than the slice level, and smaller than the slice level respectively.

7.   The optical disk device as set forth in claim 1,
wherein the detected predetermined waveform includes a plurality of wavelengths, and
the optical disk device, further comprising:

a wavelength selecting unit selecting the detected waveform based on a ratio of the measured plural wavelengths.

8.   The optical disk device as set forth in claim 7, further comprising:

a longest value holding unit holding a longest value of the wavelengths in the selected waveform; and
a longest expected value holding unit holding a longest wavelength expected value,

wherein said control signal generator further comprises a frequency error calculating unit which compares the held longest value of the wavelengths and the held longest wavelength expected value to calculate an error of a cycle of the A/D conversion in said A/D converter.

9. The optical disk device as set forth in claim 8, wherein said longest value holding unit holds the longest value of the measured wavelengths that falls within a predetermined range.

10. A reproduction method of information on an optical disk, comprising:

converting by an A/D converter an RF signal reproduced from an optical disk from an analog value to a digital value to output a digital RF signal;
comparing the outputted digital RF signal with a plurality of set values to detect a predetermined waveform from the digital RF signal;
measuring a wavelength of the detected waveform; and
generating a control signal controlling the A/D conversion in the AD converter, based on the measured wavelength.

11. The reproduction method of information on the optical disk as set forth in claim 10,
wherein said waveform detection includes detecting the predetermined waveform based on whether the digital RF signal proximate to each of the plural set values presents an incremental change or a decremental change with time.

12. The reproduction method of information on the optical disk device as set forth in claim 10, wherein the predetermined waveform is one of a combination of a peak and a valley and a combination of a valley and a peak.

13. The reproduction method of information on the optical disk as set forth in claim 12, wherein saidwaveformdetection includes discriminating the combination of the peak and the valley and the combination of the valley and the peak from each other to detect the waveform.

14. The reproduction method of information on the optical disk as set forth in claim 10, wherein the number of the plural set values is three or more.

15. The reproduction method of information on the optical disk as set forth in claim 14, wherein the plural set values are proximate to a slice level, larger than the slice level, and smaller than the slice level, respectively.

16. The reproduction method of information on the optical disk as set forth in claim 10, wherein the detected predetermined waveform includes a plurality of wavelengths, and
the reproduction method further comprising
selecting the detected waveform based on a ratio of the measured plural wavelengths.

17. The reproduction method of information on the optical disk as set forth in claim 16, further comprising
holding a longest value of the wavelengths in the selected waveform,
wherein said generation of the control signal further comprises comparing the held longest value of the wavelengths and a longest wavelength expected value held by a longest expected value holding unit to calculate an error of a cycle of the A/D conversion in the A/D converter.

18. The reproduction method of information on the optical disk as set forth in claim 17, wherein said holding the longest value of the wavelengths in the selected waveform comprises holding a longest value of the measured wavelengths that falls within a predetermined range.

19. An optical disk whose information reproduced by a reproduction method, the reproduction method comprising:

converting by an A/D converter an RF signal reproduced from an optical disk from an analog value to a digital value to output a digital RF signal;
comparing the outputted digital RF signal with a plurality of set values to detect a predetermined waveform from the digital RF signal;
measuring a wavelength of the detected waveform; and
generating a control signal controlling the A/D conversion in the AD converter, based on the measured wavelength.

# FIG. 1

# FIG. 2

RF SIGNAL → | WAVEFORM DETECTING UNIT | 202

| WAVELENGTH MEASURING UNIT | 203

| WAVELENGTH RATIO EVALUATING UNIT | 204

PEAK HOLD UNIT — 205

FREQUENCY ERROR DETECTION SIGNAL

FREQUENCY ERROR

LONGEST WAVELENGTH EXPECTED VALUE

RELATIVE FREQUENCY ERROR CALCULATING UNIT — 206

+ −

# FIG. 3